# EUROPEAN PATENT APPLICATION

(11) **EP 1 626 515 A1**
(43) Date of publication of application: **15.02.2006**
(21) Application number: 04733656.5
(22) Date of filing: 18.05.2004
(51) Int. Cl.: H04L 1/00

(54) **ERROR CORRECTION ENCODING/DECODING APPARATUS AND ERROR CORRECTION ENCODING/DECODING METHOD**

(30) Priority: 19.05.2003 JP 2003140570
(71) Applicant: MATSUSHITA ELECTRIC INDUSTRIAL CO., LTD., Kadoma-shi, Osaka 571-8501 (JP)
(72) Inventor: HASHIMOTO, Kazunari, Ishikawa 923-0064 (JP); UESUGI, Mitsuru, Kanagawa 238-0048 (JP)
(74) Representative: Grünecker, Kinkeldey, Stockmair & Schwanhäusser Anwaltssozietät
(86) International application number: PCT/JP2004/007034
(87) International publication number: WO 2004/102861

(57) **Abstract**

An error correction coding apparatus which improves the throughput of the whole system, while minimizing the increase of the circuit size and the amount of processing operation of the whole apparatus. In this apparatus, a data divider 132 divides transmission data into a plurality of blocks to generate n divided blocks. The n error correction coders out of N error correction coders 134 carry out an error correction coding on each of the n divided blocks in units of block, and outputs the divided blocks. A data concatenator 136 concatenates the n code blocks that have been error-correction-coded in units of block. A division/concatenation controller 138 controls at least one of data divider 132 and data concatenator 136 so that the division of the transmission data and the concatenation of the code blocks are carried out in units of bit.

## Description

### Technical Field

The present invention relates to an error correction coding and decoding apparatus and an error correction coding and decoding method using block codes.

### Background Art

Up to now, communication schemes that can realize a high speed data transmission in data communication systems have been studied. For example, in the field of mobile communications, studies on high speed packet communication schemes have been made in HSDPA (High Speed Downlink Packet Access) of 3GPP (3rd Generation Partnership Project) and in 1xEV-DO (1x Evolution-Data Only) of 3GPP2 (3rd Generation Partnership Project 2), respectively.

Moreover, in the HSDPA and 1xEV-DO, error correction techniques for improving throughput by reducing the occurrence frequency of errors in transmitting data (packets) have been studied. For example, in a W-CDMA (Wideband-Code Division Multiple Access) scheme whose standardization is being promoted by 3GPP, block codes (for example, Turbo codes) have been employed as the error correction coding (for example, refer to 3GPP TS 25.212 V5.2.0 (2002-09): 3rd Generation Partnership Project; Technical Specification Group Radio Access Network; Multiplexing and channel coding (FDD), (Release 5), September, 2002). Moreover, it is also the same in the cdma 2000 scheme whose standardization is being promoted by 3GPP2.

Hereinafter, the operation of a conventional transmitting apparatus in the down link of the W-CDMA scheme and the operation of a receiving apparatus which carries out data communications with this transmitting apparatus will be outlined.

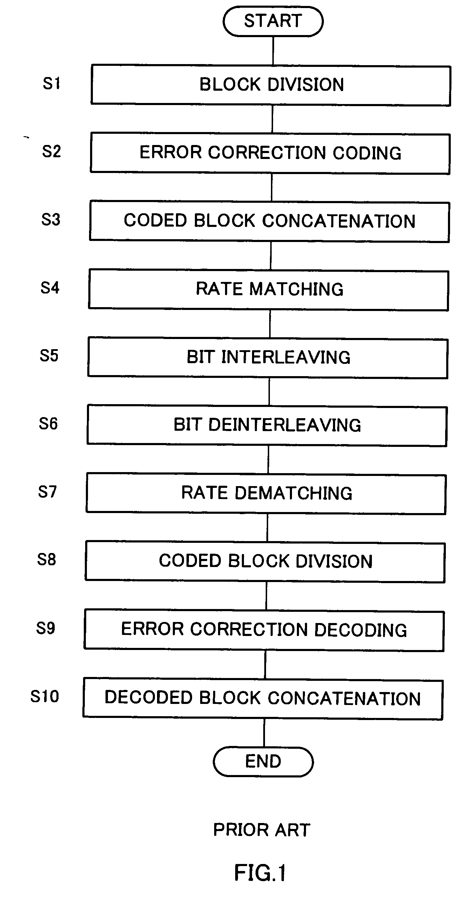

FIG.1 is a view explaining an example of the operation of a conventional transmitting apparatus and receiving apparatus.

First, the transmitting apparatus divides at a block divider transmission data into a plurality of blocks for error correction coding in the subsequent stage (S1). In this dividing, the block size of each divided block is determined, a partition position is determined so that data continuing from a predetermined position of the transmission data (from the head of the transmission data, or from right after another partition position of the previous block) to a position there behind by a block size away may become one block, and at this partition position the transmission data is divided.

Then, at an error correction coder, the transmission data is error-correction-coded for each divided block (S2). Then, at a coded block concatenator the transmission data, which has been error-correction-coded for each block, is serially concatenated in the same block order as the block order of when the transmission data is divided (S3). Then, at a rate matcher, rate matching is carried out to the concatenated transmission data (S4).

Then, at a bit interleaver, bit interleaving is carried out (S5). In this manner, coded data of one frame is generated.

Then, the receiving apparatus carries out bit de-interleaving on the coded data (the received data), at a bit de-interleaver from the transmitting apparatus (S6). The purpose for carrying out the bit interleaving and bit de-interleaving is to randomize burst errors possibly received on the transmission path, because the error correction capability for the random errors is excellent, which is the feature of Turbo codes used in the error correction.

Subsequently, rate de-matching is carried out at a rate de-matcher (S7). Then, at a coded block divider, the received data is divided into a plurality of coded blocks (the same quantity as the blocks in the transmitting apparatus) for the error correction decoding in the subsequent stage (S8). Then, at the error correction decoder, the received data is error-correction-decoded for each divided coded block (S9). Then, at a decoded block concatenator, the received data that has been error-correction-decoded for each coded block is concatenated in a block order which is the same as that of when the received data is divided (S10). In this manner, decoded data is obtained.

However, in the conventional transmitting apparatus described above, the division and concatenation of the transmission data is carried out in units of block, and the bit interleaving is carried out after the concatenation of the coded blocks. For this reason, when a large volume of data is processed at a high data transmission rate, for example, over the information transmission rate of 100 Mbit/s, the amount of processing operation not only at the block divider and the coded block concatenator but also at the bit interleaver will also increase. If the coding rate in the error correction coding is set to 1/2, the bit rate after the error correction coding will be 200 Mbit/s and the bit interleaver is required to operate at a high speed.

Accordingly, in a conventional transmitting apparatus, as the information transmission rate is sped up, the operations of the coded block concatenation and the bit interleaving are also sped up, and along with that, a problem that the hardware size or the software processing increase occurs. Moreover, as the method for improving a throughput when a retransmission control is carried out, there is a method of changing the transmission bit pattern of the retransmission packet from the transmission bit pattern of the first-time transmission packet. When attaining an improvement of a throughput using this method, it is necessary to switch an interleave pattern in the bit interleaver, and there is a problem that a control becomes complicated.

### Disclosure of Invention

It is therefore an object of the present invention to provide an error correction coding and decoding apparatus and an error correction coding and decoding method that can improve overall system throughput while minimizing the increase of the circuit size and the amount of processing operation in the whole apparatus.

According to an embodiment of the present invention, an error correction coding apparatus includes: a divider for dividing transmission data into a plurality of blocks; an error correction coder for error-correction-coding the divided transmission data in units of block; a concatenator for concatenating the transmission data that is error-correction-coded in units of block; and a controller for controlling at least one of the divider and the concatenator so that the division or the concatenation of the transmission data is carried out in units of bit.

According to another embodiment of the present invention, an error correction decoding apparatus includes: a divider for dividing received data into a plurality of blocks; an error correction decoder for error-correction-decoding the divided received data in units of block; a concatenator for concatenating the received data that has been error-correction-decoded in units of block; and a controller for controlling at least one of the divider and the concatenator so that the division or the concatenation of the received data is carried out in units of bit in accordance with the control content corresponding to the control content in the error correction coding apparatus.

According to further embodiment of the present invention, an error correction coding method includes the steps of: dividing transmission data into a plurality of blocks; error-correction-coding the divided transmission data in units of block; and concatenating the transmission data that has been error-correction-coded in units of block; wherein, the division or the concatenation of the transmission data is carried out in units of bit in at least one of the dividing step and the concatenating step.

According to further embodiment of the present invention, an error correction decoding method includes the steps of: dividing received data into a plurality of blocks;
error-correction-decoding the divided received data in units of block; and concatenating the received data that has been error-correction-decoded in units of block; wherein, in accordance with the control content corresponding to the control content in an error correction coding apparatus, the division or the concatenation of the received data is carried out in units of bit in at least one of the dividing step and the concatenating step.

A data communication system of the present invention includes: a transmitting apparatus comprising: a first divider for dividing data into a plurality of blocks; an error correction coder for error-correction-coding the divided data in units of block; a first concatenator for concatenating the data that is error-correction-coded in units of block; and a first controller for controlling at least one of the first divider and the first concatenator so that the division or the concatenation of the data is carried out in units of bit; and a receiving apparatus comprising: a second divider which divides the received data from the transmitting apparatus into the plurality of blocks; an error correction decoder for error-correction-decoding the divided received data in units of block; a second concatenator for concatenating the received data, which has been error-correction-decoded, in units of block; and a second controller for controlling at least one of the second divider and the second concatenator so that the division or the concatenation of the received data is carried out in units of bit, in accordance with the control content corresponding to the control content of the first error correction coding apparatus.

### Brief Description of Drawings

FIG.1 is a view for explaining an example of an operation of a conventional transmitting apparatus and receiving apparatus;
FIG.2 is a block diagram showing a configuration of the principal part of a data communication system according to an embodiment of the present invention;
FIG.3 is a block diagram showing a configuration of an error correction coding apparatus according to the embodiment;
FIG.4 is a block diagram showing a configuration of an error correction decoding apparatus according to the embodiment;
FIG.5 is a view for explaining a first example of the operation of the error correction coding apparatus and error correction decoding apparatus according to the embodiment;
FIG.6 is a view for explaining the concatenation of code blocks according to the embodiment;
FIG.7 is a view for explaining the division of received data according to the embodiment;
FIG.8 is a view for explaining a second example of an operation of the error correction coding apparatus and error correction decoding apparatus according to the embodiment;
FIG.9 is a view for explaining the division of transmission data according to the embodiment;
FIG.10 is a view for explaining the concatenation of decodes blocks according to the embodiment;
FIG.11 is a view for explaining the operation involved in H-ARQ control of the transmitting apparatus and receiving apparatus according to the embodiment;
FIG.12 is a view showing a bit order of a first-time transmission packet according to the embodiment; and
FIG. 13 is a view showing the bit order of a first-time retransmission packet according to the embodiment.

### Best Mode for Carrying out the Invention

Hereinafter, the embodiments of the present invention will be described in detail with reference to the accompanying drawings. In addition, in the following embodiments, the description will be made assuming the transmission data transmitted to a receiving apparatus from transmitting apparatus is data larger than a predetermined maximum code block size.

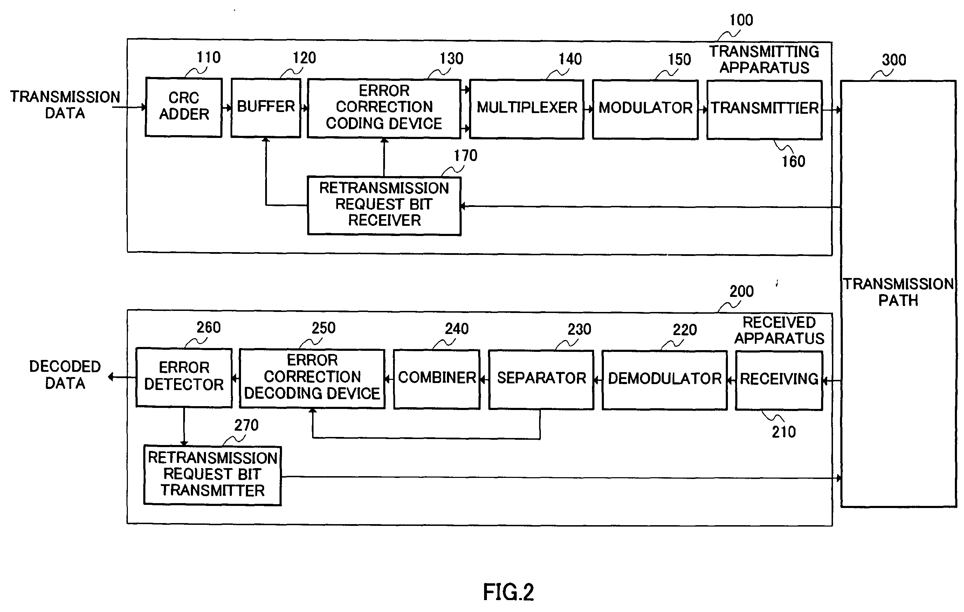

FIG.2 is a block diagram showing a configuration of the principal part of data communication system according to an embodiment of the present invention. The data communication system shown in FIG.2 includes transmitting apparatus 100 and receiving apparatus 200. Transmitting apparatus 100 and receiving apparatus 200 carry out data communications with each other through transmission path 300 (a wired transmission path or a wireless transmission path).

Transmitting apparatus 100 includes CRC (Cyclic Redundancy Check) adder 110, buffer 120, error correction coding device 130, multiplexer 140, modulator 150, transmitter 160, and retransmission request bit receiver 170.

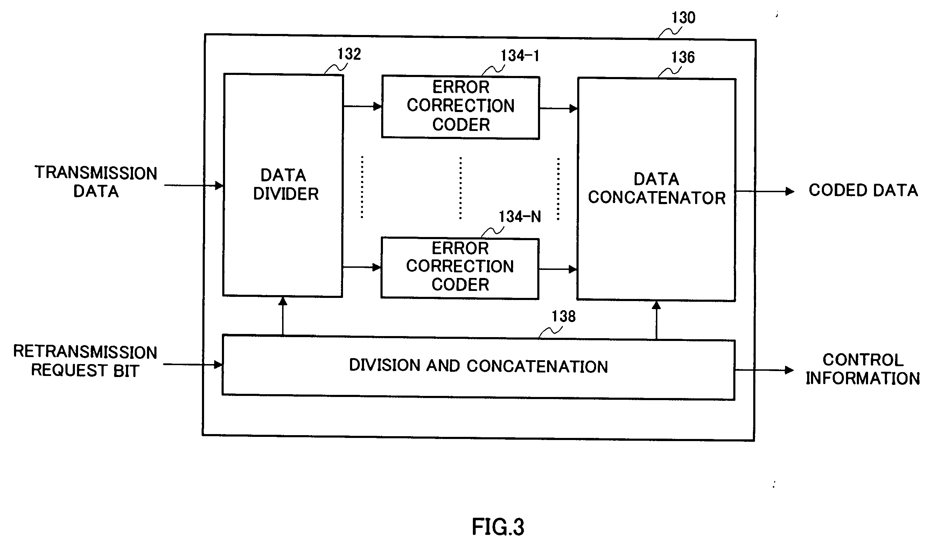

The inner configuration of error correction coding device 130 is as shown in FIG.3. Error correction coding device 130 includes data divider 132, N (N is an integer of two or more) error correction coders 134-1 to 134-N, data concatenator 136, and division and concatenation controller 138. Hereinafter, an arbitrary one out of N error correction coders 134-1 to 134-N will be described as "error correction coder 134".

CRC adder 110 adds CRC for detection of errors, to the transmission data for detecting errors.

Buffer 120 temporarily stores the transmission data to which CRC has been added. In addition, when a retransmission request bit (NACK: Negative Acknowledgment) is not received, that is, when ACK (Acknowledgment) is received, new transmission data is outputted, and, when NACK is received, the transmission data that has been transmitted is outputted again.

Data divider 132 divides the transmission data into n blocks (n is an integer of two or more, and N or less), in accordance with a transmission side dividing pattern designated from division and concatenation controller 138. At this time, the transmission data is divided so that the block size (hereinafter, referred to as the "first block size") of each divided block becomes equal to or less than the above-described maximum code block size and uniform (equal to each other), and also has the number of bits corresponding to the size of the code block and the coding rate. When the first block size does not become uniform, "0" information is added to the head of the data. In addition, data divider 132 assigns n divided blocks, which is generated by dividing the transmission data, to n error correction coders 134, respectively.

Each of N error correction coders 134, when one of the n divided blocks is assigned, carries out error correction coding on this divided block. Moreover, code block generated by error-correction-coding the divided block is outputted.

Data concatenator 136 concatenates n code blocks that have been error-correction-coded in units of block in accordance with a transmission side concatenating pattern designated from division and concatenation controller 138 and thereby generate coded data.

Division and concatenation controller 138 controls at least one of data divider 132 and data concatenator 136 so that the division of the transmission data or the concatenation of the code blocks is carried out in units of bit.

More specifically, division and concatenation controller 138, when making data divider 132 carry out the division of the transmission data in units of bit, designates the transmission side dividing pattern of when the transmission data is divided in units of bit, to data divider 132. Here, the transmission side dividing pattern designated is one of a first transmission side dividing pattern, with which the transmission data is divided into such an arrangement that the transmission data is serial to parallel converted every one bit, and a second transmission side dividing pattern, with which the transmission data is divided so that continuous bits of the same number as the first block size are arranged in one divided block.

In designating the transmission side dividing pattern, division and concatenation controller 138, when receiving ACK, designates second transmission side dividing pattern to data divider 132, and it designates first transmission side dividing pattern to data divider 132, when receiving NACK. In this manner, the transmission side dividing pattern designated to data divider 132 is changed according to the reception results of the retransmission request bit.

In addition, although in this embodiment above-described two types of transmission side dividing patterns are used; three or more types of different transmission side dividing patterns may be used. For example, when NACK is received after the first-time retransmission, a third transmission side dividing pattern different from the first and second transmission side dividing patterns is designated. In this way, the transmission side dividing pattern designated to data divider 132 may be changed for each retransmission.

Moreover, division and concatenation controller 138, when making data concatenator 136 carry out the concatenation of the code blocks in units of bit, designates the transmission side concatenating pattern when concatenating the code block in units of bit to data concatenator 136. Here, the transmission side concatenating pattern designated is one of a first transmission side concatenating pattern, with which the code blocks are concatenated in such an arrangement that the n code blocks are parallel to serial converted every one bit, and a second transmission side concatenating pattern, with which the code blocks are concatenated in such an arrangement that the bit order in each code block does not change.

In designating the transmission side concatenating pattern, division and concatenation controller 138, when receiving ACK, designates the second transmission side concatenating pattern to data concatenator 136 and, when receiving NACK, designates the first transmission side concatenating pattern to data concatenator 136. Thus, according to the reception results of retransmission request bit, the transmission side concatenating pattern designated to data concatenator 136 is changed.

In addition, although in this embodiment above-described two types of transmission side concatenating patterns are used; three or more types of different transmission side concatenating patterns may be used. For example, when NACK is received after the first-time retransmission, a third transmission side concatenating pattern different from the first and second transmission side concatenating patterns is designated. In this way, the transmission side concatenating pattern designated to data concatenator 136 may be changed for each retransmission.

Moreover, division and concatenation controller 138 generates control information indicating the control content of data divider 132 and data concatenator 136 (i.e. the transmission side dividing pattern and the transmission side concatenating pattern designated to data divider 132 and data concatenator 136). Multiplexer 140 multiplex the control information into the coded data.

Modulator 150 modulates the coded data in which the control information has been multiplexed, using a scheme suitable for the propagation environment on transmission path 300 so that the amount of the coded data after modulation matches wireless bandwidth.

Transmitter 160 transmits the modulated coded data.

Retransmission request bit receiver 170 receives a retransmission request bit from retransmission request bit transmitter 270 of receiving apparatus 200. More specifically, ACK or NACK received from retransmission request bit transmitter 270 is transferred to buffer 120 and error correction coding device 130.

Next, the configuration of receiving apparatus 200 carrying out data communications with the above-described transmitting apparatus 100 will be explained.

Receiving apparatus 200 includes receiver 210, demodulator 220, separator 230, combiner 240, error correction decoding device 250, error detector 260, and retransmission request bit transmitter 270.

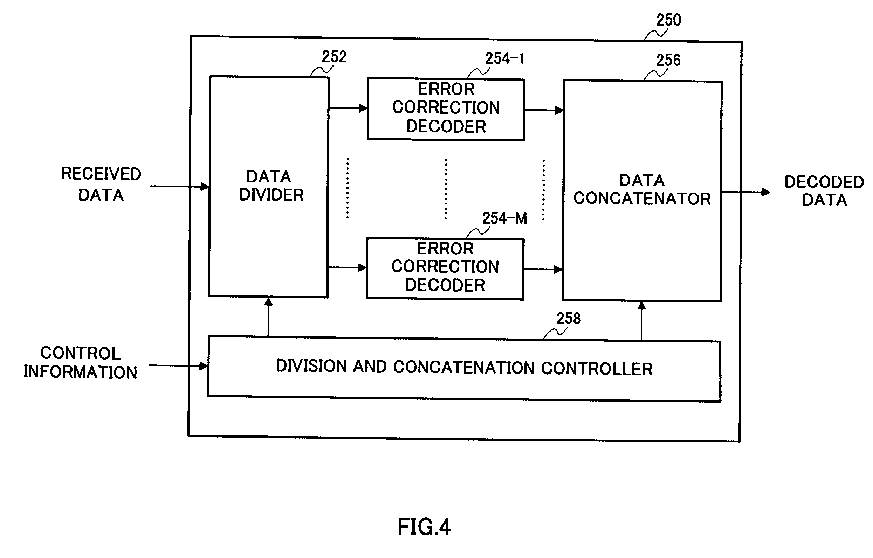

The inner configuration of error correction decoding device 250 is as shown in FIG.4. Error correction decoding device 250 includes data divider 252, M (M is an integer of N or more) error correction decoders 254-1 to 254-M, data concatenator 256, and division and concatenation controller 258. Hereinafter, anarbitrary one out of M error correction decoders 254-1 to 254-M will be described as "error correction decoder 254".

Receiver 210 receives the coded data from transmitting apparatus 100 through transmission path 300.

Demodulator 220 demodulates the received coded data (hereinafter, referred to as the "received data") using the same scheme as used in modulator 150.

Separator 230 separates the control information which has been multiplexed in the received data from the received data.

Combiner 240, when the received data from separator 230 is a new data (the first-time transmission data), outputs the received data as it is and stores the received data temporarily. On the other hand, when the received data from separator 230 is data that was already received (the retransmission data), combiner 240 combines this received data with the received data that is stored temporarily, and the combined data is outputted.

Data divider 252 divides the received data into n blocks in accordance with a receiving side dividing pattern designated from division and concatenation controller 258. Moreover, data divider 252 assigns n divided code blocks generated by dividing received data to the n error correction decoder 254 respectively. In addition, the block size (hereinafter, referred to as the "second block size") of each divided code block is determined on the basis of the transmission data before coding.

Each of M error correction decoders 254, when one of the n divided code blocks has been assigned thereto, carries out an error correction decoding on this divided code block, and also outputs the decode block generated by error-correction-decoding the divided code blocks.

Data concatenator 256 concatenates n decode blocks which are error-correction-decoded in units of block, in accordance with a receiving side concatenating pattern designated from division and concatenation controller 258, and thereby generate the decoded data. Division and concatenation controller 258 obtains the control information, and also controls one of data divider 252 and data concatenator 256 with the control content corresponding to the control content indicated by the control information, so that the division of the received data or the concatenation of the decode block is carried out in units of bit.

More specifically, division and concatenation controller 258, when making data divider 252 carry out the division of the received data in units of bit (when data concatenator 136 concatenates transmission data in units of bit), designates the receiving side dividing pattern which divides the received data in units of bit, to data divider 252. Here, the receiving side dividing pattern designated is one of a first receiving side dividing pattern, with which the received data is divided in such an arrangement that the received data is serial to parallel converted every one bit, and a second receiving side dividing pattern, with which the received data is divided so that continuous bits of the same number as the second block size are arranged in one divided code block.

In this designation of the receiving side dividing pattern, division and concatenation controller 258, when the received data is the first-time transmission data, designates the second receiving side dividing pattern to data divider 252, and when the received data is the retransmission data, designates the first receiving side dividing pattern to data divider 252. In this way, the receiving side dividing pattern designated to data divider 252 is changed depending on the received data.

In addition, in this embodiment, above-described two types of receiving side dividing patterns are used. However, the number of patterns is not restricted to two. Division and concatenation controller 258 has the same number of the receiving side dividing pattern as the number of the transmission side concatenating pattern which division and concatenation controller 138 has. Moreover, division and concatenation controller 258 always uses the receiving side dividing pattern corresponding to the transmission side concatenating pattern designated to data concatenator 136 from division and concatenation controller 138. That is, when the transmission side concatenating pattern is changed for each retransmission, the receiving side dividing pattern is also changed for each retransmission.

Moreover, the division and concatenation controller 258, when making data concatenator 256 carry out the concatenation of the code blocks in units of bit (when data divider 132 has divided the transmission data in units of bit), designates the receiving side concatenating pattern, which concatenates the decode blocks in units of bit, to data concatenator 256. Here, the receiving side concatenating pattern designated is one of a first receiving side concatenating pattern, with which the code blocks are concatenated in such an arrangement that the n code blocks are parallel to serial converted every one bit, and a second receiving side concatenating pattern, with which the code blocks are concatenated in such an arrangement that the bit order in each code block does not change.

In this designation of the receiving side concatenating pattern, division and concatenation controller 258 designates the second receiving side concatenating pattern to data concatenator 256 when the received data is the first-time transmission data, and it designates the first receiving side concatenating pattern to data concatenator 256 when the received data is the retransmission data. In this way, the receiving side concatenating pattern designated to data concatenator 256 is changed depending on the received data.

In addition, in this embodiment above-described two types of receiving side concatenating patterns are used. However, the number of patterns is not restricted to two. Division and concatenation controller 258 has the same number of the receiving side concatenating pattern as the number of the transmission side dividing pattern which division and concatenation controller 138 has. Moreover, division and concatenation controller 258 always uses the receiving side concatenating pattern corresponding to the transmission side dividing pattern designated to data divider 132 from division and concatenation controller 138. That is, when the transmission side dividing pattern is changed for each retransmission, the receiving side concatenating pattern is also changed for each retransmission.

Error detector 260 carries out error detection on the decoded data.

Retransmission request bit transmitter 270 transmits ACK when no reception error is detected in error detector 260, and transmits NACKwhen any error is detected in error detector 260.

Further, two examples of the operation of error correction coding device 130 in transmitting apparatus 100 and error correction decoding device 250 in receiving apparatus 200 having above-described configuration will be described. In addition, here, description will be made assuming that the maximum code block size is 5, 114 bits, the transmission data before dividing has 18,304 bits, the number of error correction coder 134 and error correction decoder 254 is four, and in error correction coder 134 the Turbo coding is carried out with a coding rate of 1/2 and twelve tail bits.

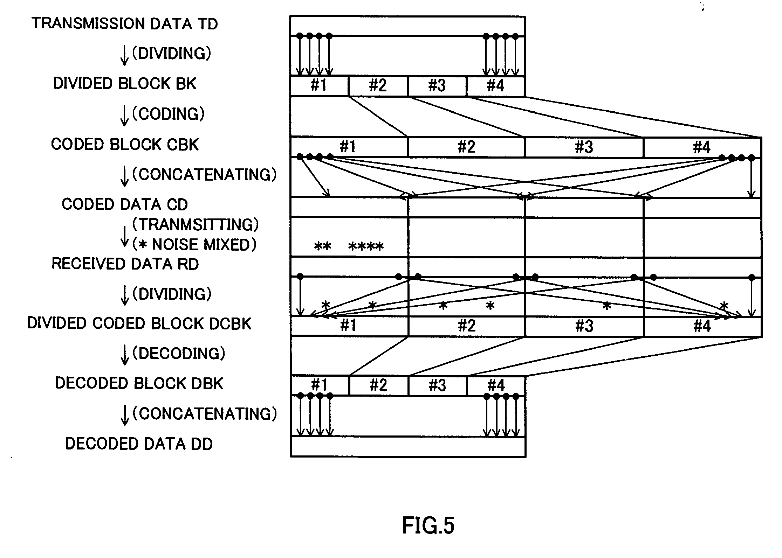

Hereinafter, as a first example of the operation, a case where the first transmission side concatenating pattern is designated in division and concatenation controller 138 will be explained using FIG.5. First, error correction coding device 130, in data divider 132, divides the transmission data TD into four blocks and thereby generates four code blocks BK #1 to #4.

Here, the block size of each of the code blocks BK #1 to #4 is 4,576 bits. Then, code blocks BK #1 to #4 are assigned to four error correction coder 134 respectively.

In addition, in four error correction coder 134, the assigned divided blocks BK #1 to #4 are Turbo coded in units of block to generate four code blocks CBK #1 to #4.

Note that, in this embodiment, although Turbo coding scheme is employed as an error correction coding scheme, the error correction coding scheme is not restricted thereto. For example, the LDPC (Low-Density Parity Check) scheme may be employed as the error correction coding scheme.

Then, in data concatenator 13, four code blocks CBK #1 to #4 are concatenated and thereby coded data CD is generated.

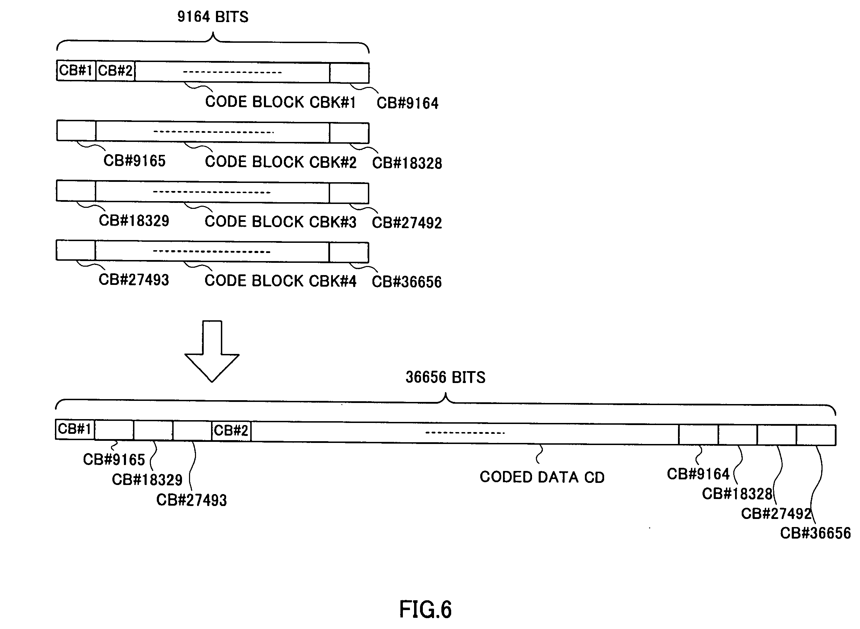

More specifically, in accordance with the first transmission side concatenating pattern designated from division and concatenation controller 138, code blocks CBK are concatenated in such an arrangement that coded bits CB #1 to #9164 contained in code block CBK #1, coded bits CB #9165 to #18328 contained in code block CBK #2, coded bit CB #18329 to #27492 contained in code block CBK #3, and coded bits CB #27493 to #36656 contained in code block CBK #4 are parallel to serial converted one bit by one bit (see FIG.6). For example, coded bit CB #1 positioned at the head of code block CBK #1 is arranged at the position of the head in the coded data CD, coded bit CB #9165 positioned at the head of code block CBK #2 is arranged at the position next to coded bit CB #1, coded bit CB #18329 positioned at the head of code block CBK #3 is arranged at the position next to coded bit CB #9165, and coded bit CB #27493 positioned at the head of code block CBK #4 is arranged at the position next to coded bit CB #18329. Moreover, each bit from coded bits CB #2, #9166, #18330, and #27494 positioned at the second from the head of each code block CBK to coded bits CB #9164, #18328, #27492, and #36656 positioned at the very end of each code block CBK is also arranged in a predetermined position of the coded data CD in the same pattern as that of the coded bit CB #1, #9165, #18329, and #27493.

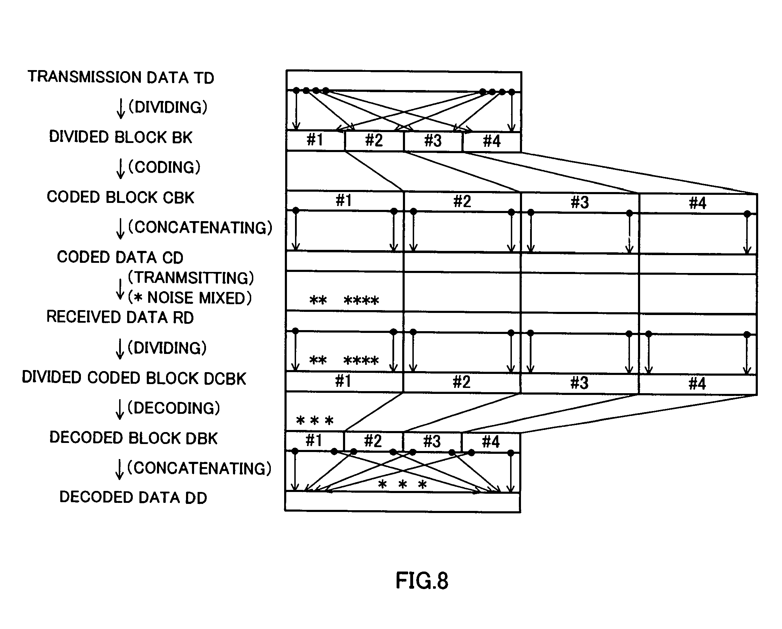

The coded data CD generated in this way is multiplexed with the control information and transmitted to receiving apparatus 200 through transmission path 300. At this time, noises which possibly cause burst errors in receiving apparatus 200 are mixed in coded data CD. For example, as shown in FIG.8, noises are mixed intensively in the portion corresponding to code block CBK #1 in the coded data CD. Then, error correction decoding device 250 divides the received data RD mixed with the noises into four blocks in data divider 252. Thereby, the four divided code blocks DCBK #1 to #4 are generated. Here, the block size of each divided code block is 9, 164 bits. Moreover, divided code block DCBK #1 corresponds to code block CBK #1, divided code block DCBK #2 corresponds to code block CBK #2, divided code block DCBK #3 corresponds to code block CBK #3, and divided code block DCBK #4 corresponds to code block CBK #4.

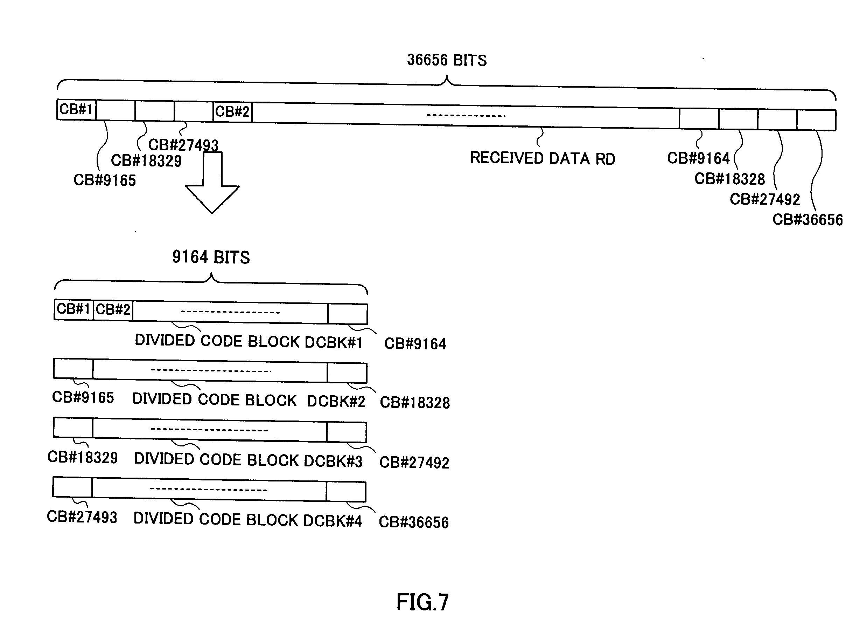

More specifically, each bit is arranged in each divided code block DCBK so that all the coded bits from coded bit CB #1 positioned at the head of received data RD to coded bit CB #36656 positioned at the very end may be serial to parallel converted one bit by one bit in accordance with the first receiving side dividing pattern that is designated from division and concatenation controller 258 (see FIG.7).

For example, coded bit CB #1 positioned at the head of received data RD is arranged at the head of divided code block DCBK #1, coded bit CB #9165 positioned at the second from the head is arranged at the head of divided code block DCBK #2, coded bit CB #18329 positioned at the third from the head is arranged at the head of divided code block DCBK #3, coded bit CB #27493 positioned at the fourth from the head is arranged at the head of divided code block DCBK #4 and coded bit CB #2 positioned at the fifth from the head is arranged at the second of divided block BK #1. Moreover, each of the coded bit from the coded bit CB #9166 positioned at the sixth from the head of the received data RD to the coded bit CB #36656 positioned at the very end of the received data RD is arranger in a predetermined position of the divided code blocks DCBK #1 to #4 with the same pattern as that of the five coded bits CB #1, #9165, #18329, #27493, and #2.

At this time, noises mixed intensively in the portion corresponding to code block CBK #1 of received data RD are dispersed. In this manner, burst errors which are possibly generated in receiving apparatus 200 are randomized and thereby the occurrence frequency of reception errors is reduced.

Then, divided code blocks DCBK #1 to #4 are assigned to four error correction decoders 134 respectively.

Then, in four error correction decoder 254, assigned divided code blocks DCBK #1 to #4 are Turbo decoded in units of block and thereby four decode blocks DBK #1 to #4 are generated.

Then, in data concatenator 256, four decode blocks DBK #1 to #4 are concatenated to generate decoded data DD.

Next, as a second example of the operation, a case where the first transmission side dividing pattern is designated in division and concatenation controller 138 will be explained using FIG.8. First, error correction coding device 130, in data divider 132, divides the transmission data TD into four (18304 bit/5114 bit=3.57...) blocks and thereby generates the four code blocks BK #1 to #4. Here, the block size of each code block BK #1 to #4 is 4,576 bits. Then, code blocks BK #1 to #4 are assigned to four error correction coder 134, respectively.

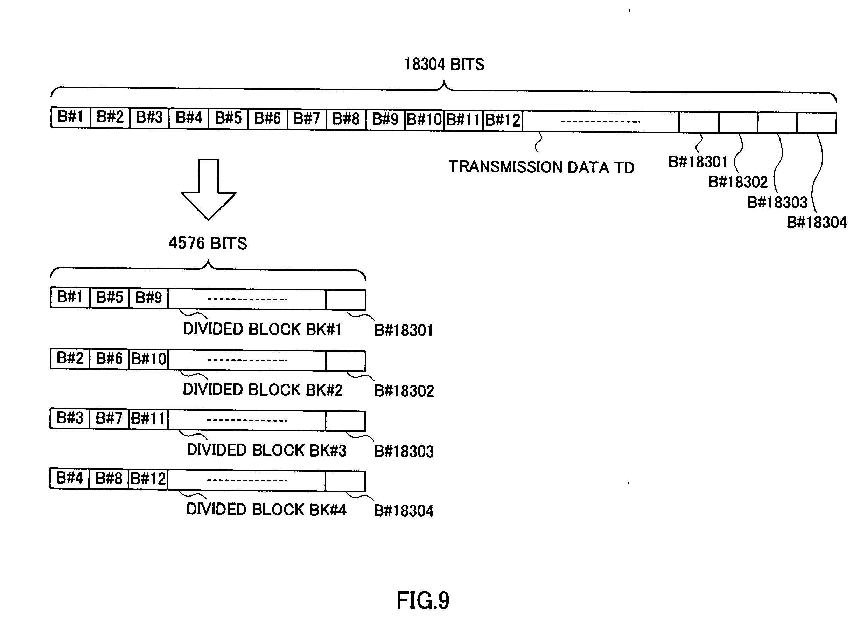

More specifically, the transmission data TD is divided in such an arrangement that all the bits from the bit B#1 of the head of the transmission data TD to the bit B #18304 at the very end may be serial to parallel converted one bit by one bit in accordance with the first transmission side dividing pattern designated from division and concatenation controller 138 (see FIG.9).

For example, bit B #1 is arranged at the head of divided block BK #1, bit B #2 is arranged at the head of divided block BK #2, bit B #3 is arranged at the head of divided block BK #3, bit B #4 is arranged at the head of divided block BK #4, and bit B #5 is arranged in the second of divided block BK #1. Moreover, bits B #6 to #18300 are arranged in the predetermined positions of divided blocks BK #1 to #4 in the same pattern as that of bits B #1 to #5, and furthermore, bit B #18301 is arranged at the very end of divided block BK #1, bit B #18302 is arranged at the very end of divided block BK #2, and bit B #18303 is arranged at the very end of divided block BK #3, and bit B #18304 is arranged at the very end of divided block BK #4.

Then, in four error correction coder 134, the assigned divided blocks BK #1 to #4 are Turbo coded in units of block to generate four code blocks CBK #1 to #4.

Then, in data concatenator 136, four code blocks CBK #1 to #4 are concatenated in the numerical order of the block to generate the coded data CD. Coded data CD is multiplexed with the control information and transmitted to receiving apparatus 200 through transmission path 300. At this time, noises which possibly cause burst errors in receiving apparatus 200 are mixed with coded data CD. For example, as shown in FIG.5, noises are mixed intensively in the portion corresponding to the code block CBK #1 in the coded data CD. Then, error correction decoding device 250, in data divider 252, divides received data RD mixed with noises into four blocks. Four divided code blocks DCBK #1 to #4 are thus generated. Here, divided code block DCBK #1 corresponds to code block CBK #1, divided code block DCBK #2 corresponds to code block CBK #2, divided code block DCBK #3 corresponds to code block CBK #3 and divided code block DCBK #4 corresponds to the code block CBK #4. Divided code blocks DCBK #1 to #4 are assigned to four error correction decoder 254 respectively.

Then, in four error correction decoder 254, assigned divided code blocks DCBK #1 to #4 are Turbo decoded in units of block to generate four decode blocks DBK #1 to #4.

Then, in data concatenator 256, four decode blocks DBK #1 to #4 are concatenated to generate a decoded data DD.

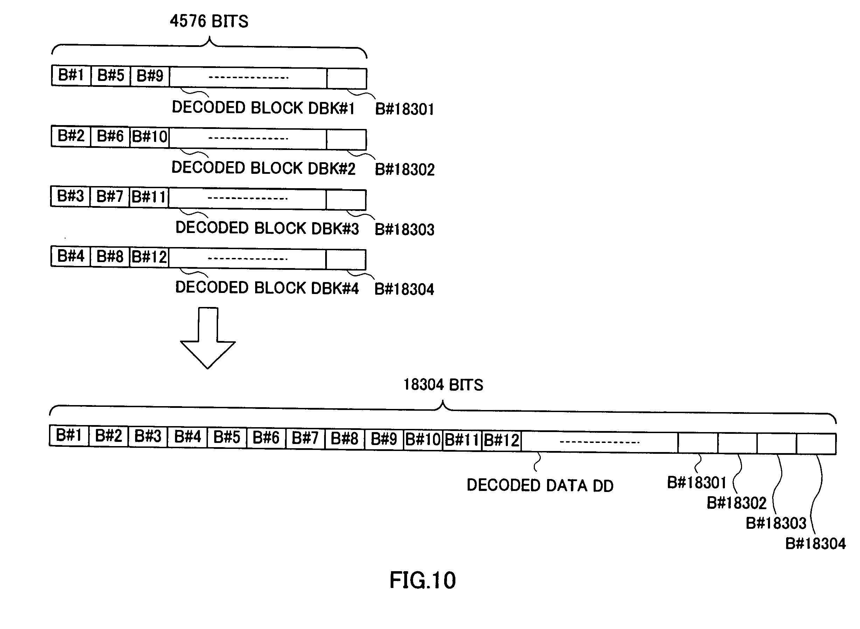

More specifically, in accordance with the first receiving side concatenating pattern designated from division and concatenation controller 258, decode block DBK are concatenated in such an arrangement that bits B #1, #5, #9, ..., #18301 contained in the decode block DBK #1, bits B #2, #6, #10, ..., #18302 contained in decode block DBK #2, bits B #3, #7, #11, ..., #18303 contained in decode block DBK #3 and bits B #4, #8, #12, ..., #18304 contained in decode block DBK #4 are parallel to serial converted one bit by one bit (see FIG.10).

For example, bit B #1 is arranged at the head bit in decoded data DD, bit B #2 is arranged next to bit B #1, bit B #3 is arranged next to bit B #2, and bit B #4 is arranged next to bit B #3 and bit B #5 is arranged next to bit B #4. Moreover, bits B #6 to #18300 are also arranged in decoded data DD in the same pattern as that of bits B #1 to #5, and furthermore, bit B #18301 is arranged next to bit B #18300, bit B #18302 is arranged next to bit B #18301, bit B #18303 is arranged next to bit B #18302, and bit B #18304 is arranged next to bit B #18303 (at the very end of decoded data DD).

At this time, even if noise is mixed in the transmission path similar to the first example of the operation (even if the transmission path characteristic is the same), the noise mixing can be assigned to a bit different from the first example of the operation. In this manner, the order of the bit transmission on the transmission path can be changed extremely easily by changing the transmission side dividing/concatenating pattern by means of division and concatenation controller 138.

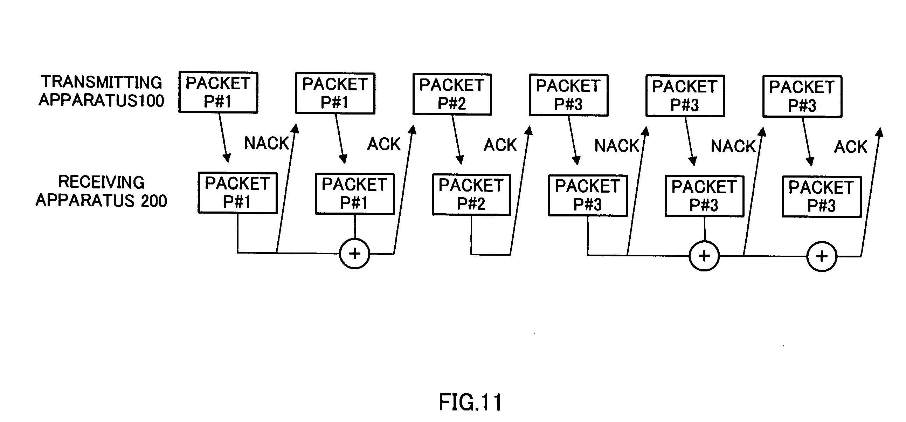

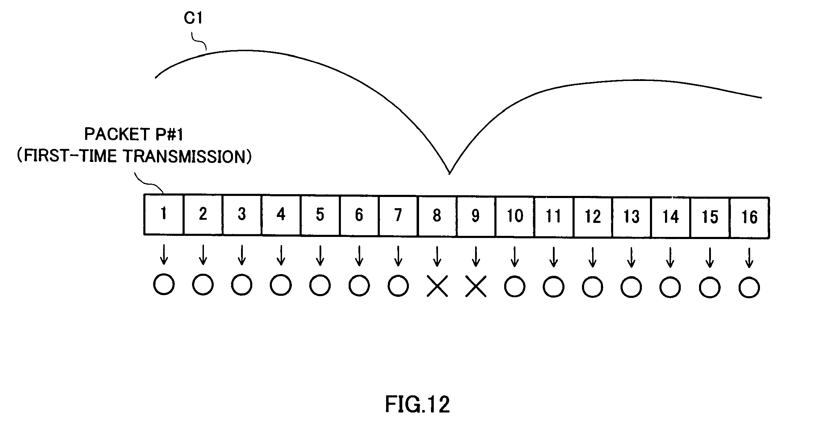

Next, the operation of transmitting apparatus 100 and receiving apparatus 200 involved in the H-ARQ (Hybrid-Automatic Repeat Request) control will be explained referring to FIG.11. Transmitting apparatus 100, when carrying out a first-time transmission of packet P #1, uses the second transmission side dividing pattern in error correction coding device 130. The bit order in packet P #1 at the time of the first-time transmission is shown in FIG.12. Note that curve C1 in FIG.12 indicates a fading environment on transmission path 300. Here, noises are mixed in bit #8 and #9 positioned at the eighth and ninth from the head.

Then, when receiving the packet P #1 of the first-time transmission, receiving apparatus uses the second receiving side concatenating pattern in error correction decoding device 250. Further, because receiving error is detected as a result of carrying out the error detection to packet P #1 of the first-time transmission, NACK is transmitted to transmitting apparatus 100.

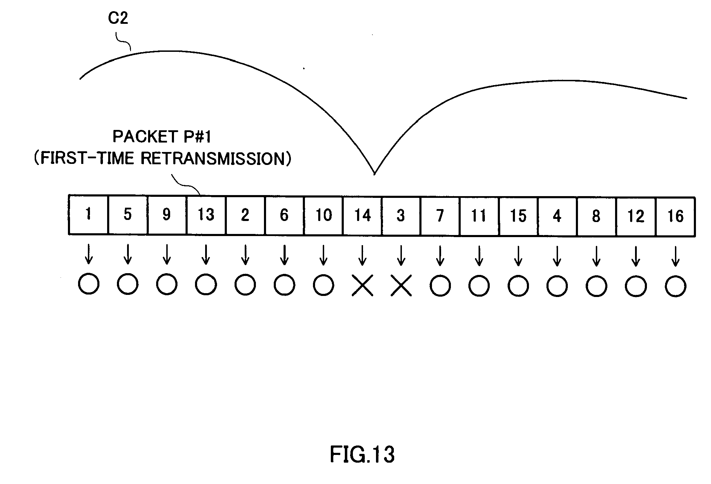

Transmitting apparatus 100 which receives NACK, when retransmitting packet P#1 (the first-time retransmission in this embodiment) uses the first transmission side dividing pattern in error correction coding device 130. The bit order in packet P #1 at the time of retransmission is shown in FIG.13. In addition, curve C2 in FIG.13 indicates a fading environment on transmission path 300. The fading environment at this time is almost equal to the fading environment at the time of the first-time transmission. Accordingly, the noises are mixed in bits #14 and #3 positioned at the eighth and ninth from the head.

Receiving apparatus 200 which received the retransmission packet P #1 carries out packet combining. Moreover, first receiving side concatenating pattern is used in the error correction decoding device 250. Then, as a result of carrying out error detection to packet P #1 after combining, receiving error is not detected. This is because retransmission packet P #1 has a bit order different from that of packet P #1 of the first-time transmission, and the time diversity gain is obtained by combining.

A method for changing bit order in a packet transmitted in the first-time transmission and in the retransmission respectively by changing the interleave pattern and the effect thereof are disclosed in "An investigation of an interleaver in HARQ application in MC-CDMA" (Matsumoto, Futagi, Miyoshi, Uesugi, Miki: The Institute of Electronics, Information and Communication Engineers General Assembly 2002, B-5-206). According to this disclosure, an interleave pattern (a dividing pattern and a concatenating pattern in this embodiment) is changed for each retransmission to thereby obtain the diversity gain, reduces the number of time of retransmission and improves throughput.

In this embodiment, the interleave pattern is not changed for each retransmission, but a pattern dividing and concatenating data is changed for each retransmission. However, both manners have a common effect that the diversity gain is consequently achieved and therefore, even in the case where the dividing pattern and concatenating pattern are changed as described above, it is possible to reduce the number of time of retransmission and improve throughput.

Then, receiving apparatus 200 transmits ACK to transmitting apparatus 100.

Transmitting apparatus 100 receiving ACK carries out the first-time transmission of packet P #2. At this time, the second transmission side dividing pattern is used in error correction coding device 130. The transmitting operation of transmitting apparatus 100 and the receiving operation of receiving apparatus 200 hereinafter are the same as those described above. In this way, if the transmission side dividing pattern is changed for each retransmission, the receive error-rate characteristics can be improved due to the time diversity, only by changing the receiving side concatenating pattern accordingly, and the number of time of retransmission can be reduced. Accordingly, throughput of the whole system can be improved with a very simple control.

In addition, here, at the first-time transmission of a packet, the second transmission side dividing pattern and the second receiving side concatenating pattern is used, and in the retransmission of the packet the first transmission side dividing pattern and the first receiving side concatenating pattern are used. However, in the first-time transmission of the packet the second transmission side concatenating pattern and the second receiving side dividing pattern can be used, and in the retransmission of the packet the first transmission side concatenating pattern and the first receiving side dividing pattern may be used. Also in this case, the same effect as that described above can be achieved.

According to this embodiment, only by dividing the transmission data in accordance with the first transmission side dividing pattern and by concatenating the decode blocks in accordance with the first receiving side concatenating pattern, or only by concatenating the code blocks in accordance with the first transmission side concatenating pattern and by dividing the received data in accordance with the first receiving side dividing pattern, the bit order of the transmission data can be changed in transmitting apparatus 100, and in receiving apparatus 200 the bit order that has been changed in transmitting apparatus 100 can be restored to the original bit order while dispersing the intensive noises mixed on transmission path 300. Therefore, receiving error rate characteristics in receiving apparatus 200 can be improved, and throughput of the whole system can be improved while suppressing an increase of the amount of processing operation to the minimum in each of the apparatus 100 and 200

In addition, it is not necessary to provide a circuits for carrying out each of the bit interleaving and bit de-interleaving in each apparatus 100 and 200 and thereby the size of apparatus 100 and 200 to be reduced respectively.

In addition, this embodiment employs dividing pattern dividing data so as to arrange it one bit by one bit and concatenating pattern concatenating data so as to arrange it one bit by one bit. However, division and concatenation of data are not restricted to the arrangement on such one bit by one bit basis. Any dividing pattern and concatenating pattern which divide and concatenate data so as to arrange it plural bits by plural bits can be used if they can disperse intensive noises mixed on the transmission path.

Further, in this embodiment, error correction decoding device 250 determines the dividing pattern and the concatenating pattern by receiving control information from error correction coding device 130. However, it is possible to configure error correction coding device 130 and error correction decoding device 250 to determine respectively the dividing pattern and the concatenating pattern in accordance with a predetermined rule and the dividing pattern and the concatenating pattern to set respectively from an external apparatus.

Moreover, in this embodiment, along with the H-ARQ control, namely for each retransmission, change of the dividing pattern and the concatenating pattern is carried out. However, change of the transmission side concatenating pattern and switching of the receiving side dividing pattern can be carried out independently from the H-ARQ control.

As described above, according to the present invention, the throughput of the whole system can be improved while minimizing the increase of the circuit size and the amount of processing operation of the whole apparatus.

The present specification is based on Japanese PatentApplicationNo.2003-140570, filed on May 19, 2003, the entire content of which is incorporated herein by reference.

### Industrial Applicability

The present invention is applicable to an error correction coding and decoding apparatus and an error correction coding and decoding method using block codes.

## Claims

1. An error correction coding apparatus comprising:
a divider for dividing transmission data into a plurality of blocks;
an error correction coder for error-correction-coding the divided transmission data in units of block;
a concatenator for concatenating the transmission data that has been error-correction-coded in units of block; and
a controller that controls at least one of the divider and the concatenator so that dividing of the transmission data or concatenating of the transmission data is carried out in units of bit.

2. The error correction coding apparatus according to claim 1, wherein the controller changes, for each retransmission, a dividing pattern with which the divider divides the transmission data in units of bit.

3. The error correction coding apparatus according to claim 1, wherein the controller changes, for each retransmission, a concatenating pattern with which the concatenator concatenates the transmission data in units of bit.

4. An error correction decoding apparatus comprising:
a divider for dividing received data into a plurality of blocks;
an error correction decoder for error-correction-decoding the divided received data in units of block;
a concatenator for concatenating the received data that has been error-correction-decoded in units of block; and
a controller that controls at least one of the divider and the concatenator so that dividing of the received data or concatenating of the received data is carried out in units of bit in accordance with a control content corresponding to a control content in an error correction coding apparatus.

5. The error correction decoding apparatus according to claim 4, wherein the controller changes, for each retransmission, a dividing pattern with which the divider divides the received data in units of bit.

6. The error correction decoding apparatus according to claim 4, wherein the controller changes, for each retransmission, a concatenating pattern with which the concatenator concatenates the received data in units of bit.

7. An error correction coding method comprising steps of:
dividing transmission data into a plurality of blocks;
error-correction-decoding the divided received data in units of block; and
concatenating the transmission data that has been error-correction-coded in units of block,
wherein in at least one of the steps of dividing and concatenating, dividing of the transmission data or concatenating of the transmission data is carried out in units of bit.

8. An error correction decoding method comprising steps of: dividing a received data into a plurality of blocks;
error-correction-decoding the divided received data in units of block; and
concatenating the received data that has been error-correction-decoded in units of block,
wherein, in accordance with a control content corresponding to a control content in an error correction coding apparatus, dividing of the received data or concatenating of the received data is carried out in units of bit in at least one of the step of dividing and concatenating.

9. A data communication system including a transmitting apparatus and a receiving apparatus, wherein the transmitting apparatus comprises:
a first divider for dividing data into a plurality of blocks;
an error correction coder for error-correction-coding the divided data in units of block;
a first concatenator for concatenating the data that has been error-correction-coded in units of block; and
a first controller that controls at least one of the first divider and the first concatenator so that dividing of the data or concatenating of the data is carried out in units of bit; and
the receiving apparatus comprises:
a second divider that divides the received data-from the transmitting apparatus into the plurality of blocks;
an error correction decoder for error-correction-decoding the divided received data in units of block;
a second concatenator for concatenating the received data which has been error-correction-decoded in units of block; and
a second controller that controls at least one of the second divider and the second concatenator so that dividing of the received data or concatenating of the received data is carried out in units of bit in accordance with a control content corresponding to a control content of the first error correction coding apparatus.
